# EUROPEAN PATENT SPECIFICATION

(11) **EP 3 390 011 B1**
(45) Date of publication and mention of the grant of the patent: **27.10.2021**
(21) Application number: 16901848.8
(22) Date of filing: 12.05.2016
(51) Int. Cl.: B29C 67/00, B33Y 30/00, B33Y 40/00, B33Y 50/02

(54) **GENERATING A COOLING AIRFLOW FOR A PRINTHEAD**
ERZEUGUNG EINES KÜHLLUFTSTROMS FÜR EINEN DRUCKKOPF
GÉNÉRATION D'UN ÉCOULEMENT D'AIR DE REFROIDISSEMENT POUR UNE TÊTE D'IMPRESSION

(43) Date of publication of application: 24.10.2018
(73) Proprietor: Hewlett-Packard Development Company, L.P., Spring TX 77389 (US)
(72) Inventor: ALEJANDRE, Ignacio, 08174 Sant Cugat del Valles (ES); CULUBRET, Sergi, 08174 Sant Cugat del Valles (ES); SANCHEZ RIBES, Salvador, 08174 Sant Cugat del Valles (ES); GUTIERREZ, Bernardo, A., San Diego, CA 92127-1899 (US)
(74) Representative: Haseltine Lake Kempner LLP
(86) International application number: PCT/US2016/032040
(87) International publication number: WO 2017/196334

(56) References cited:
- WO-A1-00/43209
- WO-A1-2015/060948
- WO-A2-2015/108546
- DE-A1-102013 004 940
- JP-A- H03 132 386
- JP-A- H09 309 200
- JP-A- 2002 254 681
- JP-A- 2002 254 681
- JP-A- 2003 191 580
- US-A- 4 968 160
- US-A1- 2013 057 615
- US-A1- 2016 068 793

## Description

### Background

A printing system can include a printhead for delivering an agent, such as a liquid agent or other substance, to a target. In some examples, a printhead can be used in a three-dimensional (3D) printing system, which is able to form 3D objects. A 3D printing system performs a 3D printing process, which is also referred to as an additive manufacturing (AM) process, in which successive layers of material(s) of a 3D object are formed under control of a computer based on the 3D model or other electronic representation of the object. The layers of the object are successively formed until the entire 3D object is formed.

### Brief Description Of The Drawings

Some implementations of the present disclosure are described with respect to the following figures.
Figs. 1 and 2 are block diagrams of portions of printing systems according to some examples.
Fig. 3 is a perspective view of a portion of a printing system according to some examples.
Fig. 4 is a block diagram of a cooling solution that includes a sprayer according to further examples.
Fig. 5 is a block diagram of a portion of a printing system that includes a controller according to some examples.
Fig. 6 is a block diagram of a non-transitory storage medium storing instructions according to some examples.
Fig. 7 is a block diagram of an active cooling subsystem according to some examples.

JPH09309200 and DE102013004490 relate to an ink jet image forming apparatus.

### Detailed Description

In the ensuing discussion, reference is made to a cooling solution for a printhead of a three-dimensional (3D) printing system. In alternative examples, cooling solutions according to some implementations can also be used to cool printheads for two-dimensional (2D) printing, in which the printhead can be used to print text or images onto a flat print medium such as a paper substrate or other type of substrate.

In a 3D printing system, a build material (or multiple different build materials) can be used to form a 3D object, by depositing the build material(s) as successive layers until the final 3D object is formed. A build material can include a powdered build material that is composed of particles in the form of fine powder or granules. The powdered build material can include metal particles, plastic particles, polymer particles, or particles of other materials. The powdered form of the build material makes the build material free flowing in some examples.

As layers of build material(s) are formed on the surface of the build platform, a printhead can be used to deliver an agent (or agents) to the successive layers of the build material(s). The agent can be a liquid agent or a different substance. In some examples, an agent can be delivered to portions of a layer of powdered build material to fuse, or to assist in the fusing of, the portions of the layer of build material, to define edges or shapes of the portions of the layer of build material, and/or for other purposes.

In a 2D printing system, a printhead can be used to deliver ink or other printing liquid to print text or images on a print medium. This print medium can be provided on a support platform of the printing system.

Generally, the term "print platform" as used herein can refer to the build platform of a 3D printing system, or to a support platform of a 2D printing system.

A "printhead" can refer to a component or an assembly of components in a printing system that is used to deliver an agent, such as a liquid agent, to a target. During a printing operation, the temperature of the printhead can rise substantially. The heating of the printhead can be caused by heating elements, such as in the form of resistors, included in the printhead that is used for heating a liquid agent prior to emission of the liquid agent from nozzles of the printhead.

In addition, in a 3D printing system, a layer of build material provided on the build platform of the printing system may be heated to a relatively high temperature. As a result, a printing chamber in which the build platform is provided can become quite hot, and as a result, a printhead can also be subjected to heating from the hot printing chamber or other elements. For some build materials, the build platform can reach a temperature of up to about 165° C, so that the printing chamber can reach a temperature of up to about 100° C, with a vertical temperature stratification present (where a lower part of the printing chamber can have a lower temperature than a higher part of the printing chamber). Although specific example temperature values are given, it is noted that the printing chamber can reach other temperatures in other examples.

A printhead can include various electronic elements, such as an integrated circuit device that controls heating in the printhead and emission of an agent from nozzles of the printhead. Such electronic elements may be damaged if the temperature of the printhead is elevated.

In accordance with some implementations of the present disclosure, an active cooling subsystem is provided in a printing system to provide cooling airflows to cool a printhead. In the ensuing discussion, reference to a "printhead" can be a reference to a single printhead or multiple printheads of the printing system.

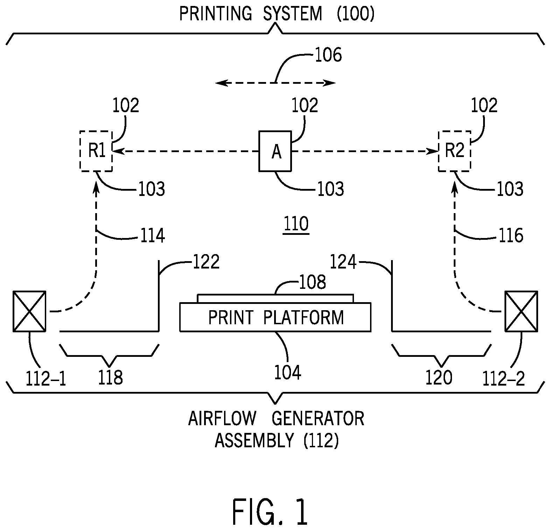

Fig. 1 is a block diagram of an example printing system 100 that includes a printhead 102 and a print platform 104. The printing system 100 can be a 2D printing system or a 3D printing system. The system described by Figure 1 comprises only two inactive regions and is therefore not part of the present invention.

The printhead 102 and the print platform 104 are movable with respect to each other. In some examples, the print platform 104 is stationary while the printhead 102 can be moved along an axis 106. In other examples, the printhead 102 can be stationary while the print platform 104 is moved relative to the printhead 102 along the axis 106. In further examples, both the printhead 102 and the print platform 104 can be moved along the axis 106. Note further that it is possible for the printhead 102 and the print platform 104 to be movable relative to each other along multiple different axes. The relative motion of the printhead 102 and the print platform 104 can be driven by a motor (or multiple motors), not shown.

The relative motion of the printhead 102 and the print platform 104 can cause the printhead 102 to be at different positions. A first position (designated A in Fig. 1) is an active position of the printhead 102, where the printhead 102 can be activated to deliver an agent to a target 108 on the print platform 104. The active position A can include any position where the printhead 102 is above the print platform 104 and thus is able to deliver an agent to a target 108 on the upper surface of the print platform 104. In some examples, if the print platform 104 is a build platform of a 3D printing system, then the target 108 can be a layer of build material onto which an agent can be delivered by the printhead 102. In other examples, if the print platform 104 is a support platform of a 2D printing system, then the target 108 is a print medium onto which ink can be delivered by the printhead 102.

The relative motion of the printhead 102 and the print platform 104 can also cause the printhead 102 to be placed at a first rest position, indicated as R1 or at a second rest position, indicated as R2. The first rest position (R1) is on a first side (left side in the orientation shown in Fig. 1) of the print platform 104, while the second rest position (R2) is on a second, different side (right side in the orientation shown in Fig. 1) of the print platform 104. The printing system 100 includes a first inactive region 118 and a second inactive region 120. When the printhead 102 is at the first rest position R1, the printhead 102 is in the first inactive region 118. When the printhead 102 is at the second rest position R2, the printhead 102 is in the second inactive region 120. An "inactive region" within a printing system can refer to a region within the printing system that is away from an active region 110 that is the region above the print platform 104, such that any operation (including delivery of cooling airflow) in the inactive region would not disturb the target 108 on the print platform 104.

In the ensuing discussion, reference is made to movement of the printhead 102 relative to the print platform 104. Note, however, that techniques or mechanisms according to some implementations can be applied to other arrangements in which the printhead 102 is stationary but the print platform 104 is moveable, or to arrangements in which both the printhead 102 and the print platform 104 are moveable.

During a print operation, the printhead 102 is moved along the axis 106 to allow the printhead 102 to be activated to deliver an agent (or agents) to selected portions of the target 108. When the printhead 102 is generally over the print platform 104 (over the active region 110), the printhead 102 is considered to be in the active position (A). In a print cycle, the printhead 102 can move back and forth across the print platform 104 and through the active region 110 between the rest position R1 and the rest position R2. The back-and-forth movement of the printhead 102 can be continual, in that the printhead 102 can start at the rest position R1, move over the print platform 104 along the axis 106, and arrive at rest position R2. Once the printhead 102 reaches rest position R2, the printhead 102 can move backwards along the axis 106 over the print platform 104 towards the rest position R1. Thus, a "rest position" of the printhead 102 can refer to a position where the printhead 102 has temporarily moved away from the active region 110 (the region above the print platform 104) during a print operation; at the rest position, the printhead 102 can be caused to reverse its direction of movement to move towards the opposite direction from the direction in which the printhead 102 arrived at the rest position, to continue with the print operation.

During a print operation, in which the printhead 102 can be moved back and forth many times over the print platform 104 (such as to process successive layers of build material formed on the print platform 104), the printhead 102 can be heated due to activation of heating elements in the printhead 102 that are used for heating an agent prior to emission of the agent from the printhead 102, such as from nozzles of the printhead 102. In addition, in a 3D printing system, the layer of build material (108) can also be heated, which causes the active region 110 above the print platform 104 to be heated to cause heating of the printhead 102.

The printhead 102 can include electronic elements (e.g. an integrated circuit device or other electronic elements), with some near an active surface 103 of the printhead 102. The electronic elements can control heating in the printhead 102 and emission of an agent from nozzles of the printhead 102. The active surface 103 of the printhead 102 includes the nozzles where an agent can be emitted towards the print platform 104. Such electronic elements of the printhead 102 can be damaged if the temperature of the printhead 102 rises above a temperature threshold.

To cool the printhead 102, an active cooling subsystem including an airflow generator assembly 112 can be provided. In some examples, the airflow generator assembly 112 includes a first airflow generator 112-1 on the first side of the print platform 104, and a second airflow generator 112-2 on the second side of the print platform 104. Each airflow generator 112-1 or 112-2 can include a fan or multiple fans. The airflow generator 112-1 is activated to cause a first cooling airflow 114 in the first inactive region 118 when the printhead 102 in the first inactive region 118, and the airflow generator 112-2 is activated to cause generation of a second cooling airflow 116 in the second inactive region 120 when the printhead 102 is in the second inactive region 120.

Note that the printhead 102 can be cooled by a respective cooling airflow while the printhead 102 is in the respective inactive region. The cooling can be performed while the printhead 102 is moving in the inactive region, and/or when the printhead 102 has been stopped at a respective rest position R1 or R2.

In some examples, a distributed cooling subsystem is provided, where cooling airflows are spread across multiple inactive regions to cool the printhead 102 (either moving or at rest) at multiple locations in the printing system. The distributed cooling subsystem provides a mechanism by which cooling of the printhead 102 in multiple distributed regions is possible, so long as the printhead 102 is located away from an active region of the printing system in which the printhead 102 is delivering an agent to the target 108 on the print platform 104.

By cooling the printhead 102 in multiple inactive regions as shown in Fig. 1, multiple opportunities for cooling the printhead 102 during a printing operation are provided, while at the same time disturbance of a layer of powdered build material in the active region 110 is avoided or reduced. Such multiple opportunities for cooling the printhead 102 at the respective inactive regions allows the active cooling subsystem to effectively reduce the temperature of the printhead below a temperature threshold that may cause damage to the printhead 102.

An airflow barrier 122 is provided between the first inactive region 118 and the active region 110, and an airflow barrier 124 is provided between the second inactive region 120 and the active region 110.

The airflow barriers 122 and 124 block the cooling airflows 114 and 116 in the respective inactive regions 118 and 120 from reaching the active region 110. A barrier "blocking" a cooling airflow that flows in an inactive region from reaching the active region 110 can refer to preventing a portion of the cooling airflow from reaching the active region 110 such that a layer of powdered build material in the active region 110 is not disturbed. The airflow barriers 122 and 124 assist in directing the cooling airflows 114 and 116 towards the printhead 102 in the respective first and second inactive regions 118 and 120. More specifically, the cooling airflows 114 and 116 can cool the active surface 103 (and other surfaces) of the printhead 102.

By preventing or reducing the amount of cooling airflow produced by the airflow generator assembly 112 from reaching the active region 110, such cooling airflow would not disturb a layer of build material on the print platform 104 in a 3D printing system. Since the layer of build material can be a powdered build material, allowing cooling airflow to reach the active region 110 at high rates can disturb the powdered build material layer to cause powders of the powdered build material to disperse due to the airflow. The dispersed powders of the powdered build material can be blown towards the printhead 102 and other components of a carriage (not shown) of the printing system, where such other components can include a heating lamp assembly, a sensor, and so forth. The dispersed powders may be ingested through the nozzles of the printhead 102 to cause clogging, or can coat surfaces of other components to reduce the performance of such other components. Moreover, powders of the powdered build material that come into contact with a hot surface, such as that of a heating lamp assembly, can cause the powders to ignite, which can damage the printing system 100 or cause a safety hazard to humans.

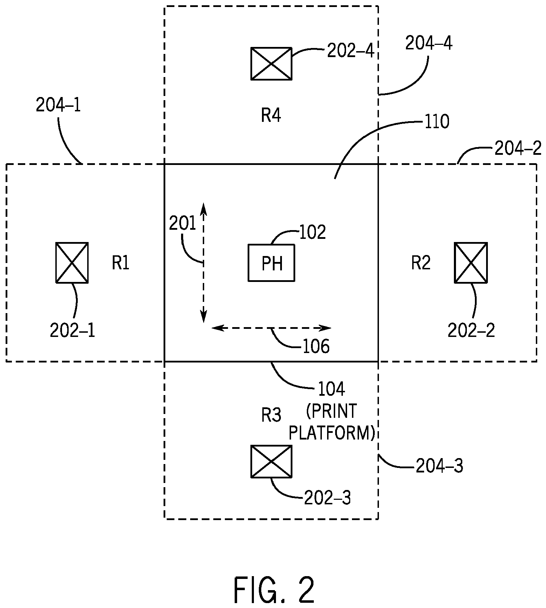

In the foregoing examples, reference is made to the printhead 102 that can move back and forth along the axis 106. It is noted that it is also possible for the printhead 102 to move along a second, different axis, in addition to movement along the axis 106. Such an arrangement is shown in Fig. 2, in which the printhead 102 and the print platform 104 are moveable relative to each other along an axis 106 as well as along an axis 201 that is generally perpendicular to the axis 106. In other examples, relative movement of the printhead 102 and the print platform 104 along other or additional different directions are also possible.

In examples according to Fig. 2 where the printhead 102 according to the invention can move along multiple (two or more) different axes, an airflow generator assembly can include additional airflow generators, which in the example according to Fig. 2 include four airflow generators 202-1, 202-2, 202-3, and 202-4. The printhead 102 can be moved to four different rest positions R1, R2, R3, and R4 during a print operation, in examples according to Fig. 2. The four different rest positions R1, R2, R3, and R4 correspond to four respective inactive regions 204-1, 204-2, 204-3, and 204-4 that are located away from the active area 110 of the printing system. The respective airflow generator 202-1, 202-2, 202-3, or 202-4 can be activated in response to the printhead 102 being located in a corresponding inactive region. For example, in response to detecting the printhead 102 being located in the inactive region 204-4, the airflow generator 202-4 can be activated to produce a cooling airflow to cool the printhead 102. When the printhead 102 moves away from the inactive region 204-4, the airflow generator 202-4 can be deactivated to conserve power. When the printhead 102 later moves to the inactive region 204-1, the airflow generator 202-1 can be activated from an inactive state to an active state to produce the corresponding cooling airflow to cool the printhead 102.

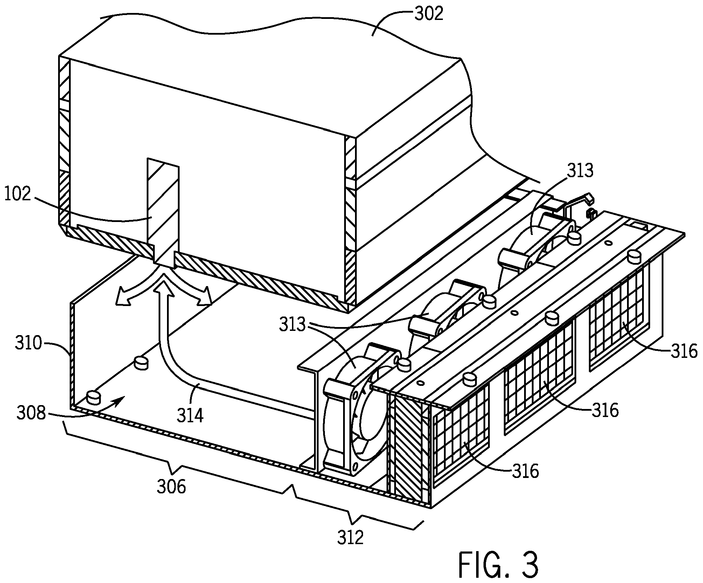

Fig. 3 is a perspective view of a portion of the printing system 100 according to further examples. Fig. 3 shows a carriage 302 that carries the printhead 102 as well as other components, such as a heating lamp assembly, a sensor, and so forth. Although not visible in Fig. 3, the carriage 102 can carry multiple printheads. The carriage 302 is moveable along multiple axes 106 and 202 as shown in Fig. 2. The movement of the carriage 302 causes the corresponding movement of the printhead 102.

Fig. 3 shows the carriage 302 having moved to an inactive region 306. The inactive region 306 in Fig. 3 can be the inactive region 120 of Fig. 1, for example. The inactive region 306 includes a chamber or conduit 308 that is defined between a barrier 310 and an airflow generator 312 (which can be the airflow generator 112-2 of Fig. 1, for example). In examples according to Fig. 3, the airflow generator 312 includes three fans 313, which can be for three printheads carried by the carriage 302. Although a specific number of fans is depicted, it is noted that the airflow generator 312 can include a different number (one or greater than one) of fans in other examples.

As shown in Fig. 3, the airflow generator 312 can produce a cooling airflow 314. The cooling airflow 314 reaches the active area of the printhead 102 to cool the active area. The barrier 310 prevents a substantial portion of the cooling airflow 314 from reaching the active region 110 of the printing system.

As further shown in Fig. 3, a filter assembly including filters 316 can also be provided at the inlets of the fans 313 of the airflow generator 312. Each filter 316 includes a filtering material to remove particulates that may be present in the environment, prior to the air being drawn through the fans 313 of the airflow generator 312. This can remove or reduce the amount of particulates in the cooling airflow 314. Examples of such particulates can include the powders of powdered build material, dust, or other contaminants. It may not be desirable to have such particulate reach the printhead 102.

The air drawn by the fans 313 can be refrigerated air that has been cooled using any of various refrigeration mechanisms.

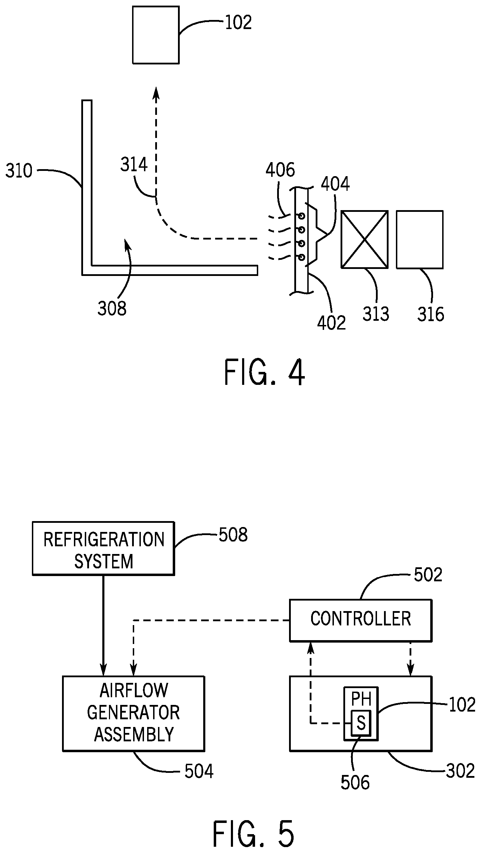

Fig. 4 is a block diagram of another example arrangement, in which a sprayer 402 is provided to produce a spray 406 of liquid (e.g. water or other liquid). The sprayer 402 can be located downstream of the fan 313. The spray 406 of liquid provides liquid droplets that can be blown by a fan 313 for delivery as a liquid aerosol together with the cooling airflow 314 to the printhead 102. The sprayer 402 can include a tube and nozzles 404 through which the spray 406 of liquid can be emitted. The presence of water aerosol or other liquid aerosol in the cooling airflow 314 delivered to the chamber 318 for cooling the printhead 102 can increase the cooling rate of the printhead 102. In other examples, the sprayer 402 can be positioned near the printhead 102 such that the sprayer 402 can spray the liquid droplets directly onto the printhead 102.

Fig. 5 is a block diagram of a portion of an example printing system, which includes a controller 502 of the printing system, an airflow generator assembly 504, the carriage 302, and the printhead 102 carried by the carriage 302. The controller 502 can be implemented as a microprocessor, a core of a multi-core microprocessor, a microcontroller, a programmable integrated circuit device, a programmable gate array, or another hardware processing circuit. The controller 502 can also in some examples include machine-readable instructions executable on the hardware processing circuit.

The controller 502 is able to control the airflow generator assembly 504. For example, the controller 502 can detect a position of the printhead 102. If the controller 502 detects that the printhead 102 is located in a given inactive region, then the controller 502 can activate a corresponding airflow generator in the airflow generator assembly 504. In response to detecting that the printhead 102 has moved away from the given inactive region, the controller 502 can deactivate the corresponding airflow generator.

The controller 502 can also control movement of the carriage 302. Since the controller 502 controls the movement of the carriage 302, the controller 502 is aware of the position of the printhead 102 at any given time. In examples where a different controller is used to control the movement of the carriage 302, the controller 502 can communicate with this different controller to determine the position of the printhead 102, or alternatively, the controller 502 can receive data from a position sensor of the carriage 302 to determine the position of the printhead 102.

In addition, in some examples, the printhead 102 includes a temperature sensor 506 to detect a temperature of the printhead 102. The measured temperature can be provided by the temperature sensor 506 to the controller 502. Based on the received temperature of the printhead 102, the controller 502 can perform feedback control of either or both of the airflow generator assembly 504 and the carriage 302. For example, the controller 502 can control a speed of fans in the airflow generator assembly 504 to control the rate of cooling airflow produced by the fans, based on the measured temperature. If the temperature sensor 506 indicates that the printhead 102 is at a higher temperature, then the controller 502 can cause the fans to rotate at a higher speed to produce a cooling airflow at a higher rate. On the other hand, if the temperature sensor 506 indicates that the printhead 102 is at a lower temperature, then the controller 502 can cause the fans to rotate at a lower speed to produce a cooling airflow at a lower rate.

In further examples, in response to determining that the temperature of the printhead 102 is sufficiently high (greater than a specified temperature threshold) such that additional time has to be provided to allow the printhead 102 to cool down using the cooling airflow from an airflow generator, the controller 502 can cause the carriage 302 to stop to temporarily pause or interrupt the print operation by causing the carriage 302 to stop for a specified time duration once the carriage 302 has moved to a rest position. The time duration at which the carriage 302 (and thus the printhead 102) is stopped is based on the time length that is predicted by the controller 502 to reduce the temperature to a sufficiently low temperature. Alternatively, the controller 502 can pause movement of the carriage 302 until the temperature sensor 506 indicates that the temperature of the printhead 102 has dropped below a temperature threshold.

As further shown in Fig. 5, an external refrigeration system 508 (external of the printing system) can be provided to pre-cool air that is used by the airflow generator assembly 504 to produce cooling airflows. The pre-cooled air allows the cooling airflows to be at a lower temperature, and allows for enhanced cooling effect.

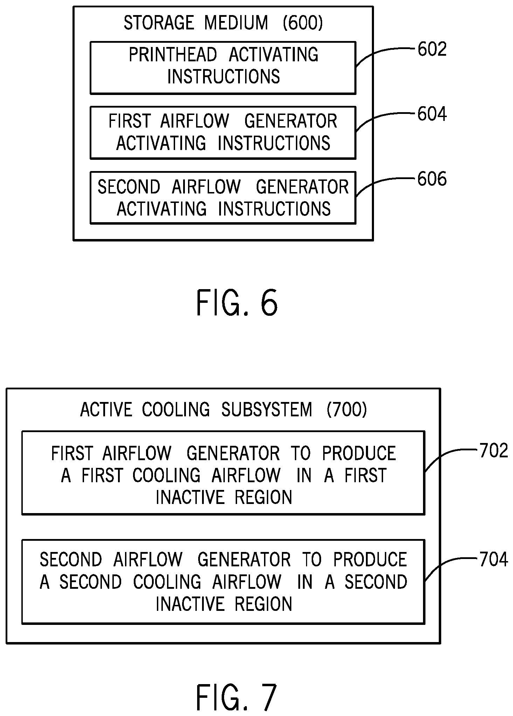

Fig. 6 is a block diagram of a non-transitory machine-readable or computer-readable storage medium 600 storing machine-readable instructions according to a configuration comprising only two inactive regions and two air flow generators, and which is not part of the invention. The machine-readable instructions stored in the storage medium 600 are executable on the controller 502 (Fig. 5) or other hardware processing circuit. The machine-readable instructions include printhead activation instructions 602 to activate a printhead to deliver an agent to a target on a print platform of the printing system as the printhead and the print platform are moved with respect to each other between a first rest position and a second rest position.

The machine-readable instructions further include first airflow generator activating instructions 604 to, in response to detecting the printhead being located in a first inactive region on a first side of the print platform, activate a first airflow generator to generate a first cooling airflow directed towards the printhead. The machine-readable instructions further include second airflow generator activating instructions 606 to, in response to detecting the printhead being located in a second inactive region on a second, different side of the print platform, activate a second airflow generator to generate a second cooling airflow directed towards the printhead.

The storage medium 600 can include one or multiple different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs); or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

Fig. 7 is a block diagram of an active cooling subsystem 700 for a printing system which comprises only two inactive regions and only two cooling airflows and which is not part of the present invention. The active cooling subsystem 700 includes a first airflow generator 702 to produce a first cooling airflow in a first inactive region in response to activation of the first airflow generator responsive to detecting a printhead of the printing system being located in the first inactive region with respect to a print platform of the printing system, and a second airflow generator 704 to produce a cooling airflow in a second inactive region in response to activation of the second airflow generator responsive to detecting the printhead being located in a second inactive region with respect to the print platform, wherein the printhead is moveable back and forth between the first and second inactive regions during a print operation in which the printhead delivers an agent to a target on the print platform while the printhead is over the active region.

In the foregoing description, numerous details are set forth to provide an understanding of the subject disclosed herein. However, implementations may be practiced without some of these details. Other implementations may include modifications and variations from the details discussed above. It is intended that the appended claims cover such modifications and variations.

## Claims

1. A printing system (100), comprising:
a printhead (102) that is relatively moveable with respect to a print platform (104); and
an airflow generator assembly (112) to:
generate a first cooling airflow (114) towards the printhead (102) responsive to the printhead (102) being in a first inactive region (118; 204-1) on a first side of the print platform (104),
generate a second cooling airflow (116) towards the printhead (102) responsive to the printhead (102) being in a second inactive region (120; 204-2) on a second side of the print platform (104) different from the first side of the print platform (104), and
generate a third cooling airflow towards the printhead (102) responsive to the printhead (102) being in a third inactive region (120; 204-2) on a third side of the print platform (104) different from the first and second sides of the print platform (104).

2. The printing system (100) of claim 1, wherein the airflow generator assembly (112) is to use pre-cooled air provided by a refrigeration system (508) in producing the first and second cooling airflows (114, 116).

3. The printing system (100) of claim 1, wherein the airflow generator assembly comprises a first airflow generator (112-1; 202-1) to generate the first cooling airflow (114), a second airflow generator (112-2; 202-2) to generate the second cooling airflow (116), and a third airflow generator (202-3) to generate the third cooling airflow.

4. The printing system (100) of claim 3, wherein the first airflow generator (112-1; 202-1) is to direct the first cooling airflow (114) through a first chamber of the first inactive region (118; 204-1) to cool the printhead (102) when the printhead (102) is at a first rest position and when the printhead (102) is moving through the first inactive region (118; 204-1), to direct the second cooling airflow (116) through a second chamber of the second inactive region (120; 204-2) to cool the printhead (102) when the printhead (102) is at a second rest position and is moving through the second inactive region (120; 204-2), and to direct the third cooling airflow through a third chamber of the third inactive region (204-2) to cool the printhead (102) when the printhead (102) is at a third rest position and is moving through the third inactive region (120; 204-2).

5. The printing system (100) of claim 4, further comprising a first barrier (122) to block the first cooling airflow (114) in the first chamber from an active region, a second barrier (124) to block the second cooling airflow (116) in the second chamber from the active region, and a third barrier (124) to block the third cooling airflow in the third chamber from the active region, to avoid disturbing a layer of powdered build material in the active region.

6. The printing system (100) of claim 1, further comprising a controller (502) to pause relative movement of the printhead (102) and the print platform (104) while the printhead (102) is at the first rest position or the second rest position or the third rest position, until the controller (502) detects that a temperature of the printhead (102) has dropped below a temperature threshold.

7. The printing system of claim 1, further comprising a controller (502) to control the airflow generator assembly (112) to adjust a speed of the first cooling airflow (114) or the second cooling airflow (116) or the third cooling airflow based on a detected temperature of the printhead (102).

8. The printing system (100) of claim 1, further comprising a filter assembly (316) through which the airflow generator assembly (112) draws air to generate the first, second and third cooling airflows (114, 116), the filter assembly (316) to remove or reduce particulates in the first and second cooling airflows (114, 116).

9. The printing system (100) of claim 1, further comprising a sprayer (402) to generate a spray of liquid to cool the printhead (102).

10. The printing system (100) of claim 1, wherein the printhead (102) is to deliver an agent to a target on the print platform (104) when the printhead (102) is in an active region (110) between the first, second and third inactive regions (118, 120; 204-1, 204-2, 204-3), the first, second and third inactive regions (118, 120; 204-1, 204-2, 204-3) being away from the active region (110).

11. A non-transitory storage medium storing instructions that upon execution cause a printing system (100) to:
activate a printhead (102) to deliver an agent to a target on a print platform (104) of the printing system (100) as the printhead (102) and the print platform (104) are moved with respect to each other between a first rest position and a second rest position;
in response to detecting the printhead (102) being located in a first inactive region (118; 204-1) on a first side of the print platform (104), activate a first airflow generator (112-1; 202-1) to generate a first cooling airflow directed towards the printhead (102); and
in response to detecting the printhead (102) being located in a second inactive region (120; 204-2) on a second, different side of the print platform (104), activate a second airflow generator (112-2; 202-2) to generate a second cooling airflow directed towards the printhead (102),
wherein the printhead (102) is moveable along a path that includes the first inactive region (118), the second inactive region (120), and a third inactive region (204-3, 204-4), the instructions upon execution causing the printing system (100) to further:
in response to detecting the printhead (102) being located in the third inactive region on a third side of the print platform (104) different from the first and second sides, activate a third airflow generator to generate a third cooling airflow directed towards the printhead (102).

12. The non-transitory storage medium of claim 11, wherein the instructions upon execution cause the printing system (100) to further:
receive, from a temperature sensor, a temperature of the printhead (102) when the printhead (102) is at a rest position in the first inactive region (118); and
pause relative movement of the printhead (102) and the print platform (104) while the printhead (102) is at the rest position to interrupt a printing operation in response to the received temperature.

13. The non-transitory storage medium of claim 11, wherein the instructions upon execution cause the printing system (100) to further:
in response to detecting the printhead (102) having moved away from the first inactive region (118), deactivate the first airflow generator (112-1); and
in response to detecting the printhead (102) having moved away from the second inactive region (120), deactivate the second airflow generator.

## Patentansprüche

1. Drucksystem (100), das Folgendes umfasst:
einen Druckkopf (102), der in Bezug auf eine Druckplattform (104) relativ bewegbar ist; und
eine Luftstromgeneratoranordnung (112), die zu Folgendem dient:
Erzeugen eines ersten Kühlluftstroms (114) in Richtung des Druckkopfes (102) als Reaktion darauf, dass der Druckkopf (102) in einem ersten inaktiven Bereich (118; 204-1) auf einer ersten Seite der Druckplattform (104) ist,
Erzeugen eines zweiten Kühlluftstroms (116) in Richtung des Druckkopfes (102) als Reaktion darauf, dass der Druckkopf (102) in einem zweiten inaktiven Bereich (120; 204-2) auf einer zweiten Seite der Druckplattform (104) ist, die sich von der ersten Seite der Druckplattform (104) unterscheidet, und
Erzeugen eines dritten Kühlluftstroms in Richtung des Druckkopfes (102) als Reaktion darauf, dass der Druckkopf (102) in einem dritten inaktiven Bereich (120; 204-2) auf einer dritten Seite der Druckplattform (104) ist, die sich von der ersten und der zweiten Seite der Druckplattform (104) unterscheidet.

2. Drucksystem (100) nach Anspruch 1, wobei die Luftstromgeneratoranordnung (112) dazu dient, vorgekühlte Luft, die durch ein Kühlsystem (508) bereitgestellt wird, bei einem Produzieren des ersten und des zweiten Kühlluftstroms (114, 116) zu verwenden.

3. Drucksystem (100) nach Anspruch 1, wobei die Luftstromgeneratoranordnung einen ersten Luftstromgenerator (112-1; 202-1), um den ersten Kühlluftstrom (114) zu erzeugen, einen zweiten Luftstromgenerator (112-2; 202-2), um den zweiten Kühlluftstrom (116) zu erzeugen, und einen dritten Luftstromgenerator (202-3) umfasst, um den dritten Kühlluftstrom zu erzeugen.

4. Drucksystem (100) nach Anspruch 3, wobei der erste Luftstromgenerator (112-1; 202-1) dazu dient, den ersten Kühlluftstrom (114) durch eine erste Kammer des ersten inaktiven Bereichs (118; 204-1) zu lenken, um den Druckkopf (102) zu kühlen, wenn der Druckkopf (102) in einer ersten Ruheposition ist, und wenn sich der Druckkopf (102) durch den ersten inaktiven Bereich (118; 204-1) bewegt, um den zweiten Kühlluftstrom (116) durch eine zweite Kammer des zweiten inaktiven Bereichs (120; 204-2) zu lenken, um den Druckkopf (102) zu kühlen, wenn der Druckkopf (102) in einer zweiten Ruheposition ist und sich durch den zweiten inaktiven Bereich (120; 204-2) bewegt, und um den dritten Kühlluftstrom durch eine dritte Kammer des dritten inaktiven Bereichs (204-2) zu lenken, um den Druckkopf (102) zu kühlen, wenn der Druckkopf (102) in einer dritten Ruheposition ist und sich durch den dritten inaktiven Bereich (120; 204-2) bewegt.

5. Drucksystem (100) nach Anspruch 4, das ferner eine erste Wand (122), um den ersten Kühlluftstrom (114) in der ersten Kammer aus einem aktiven Bereich zu blockieren, eine zweite Wand (124), um den zweiten Kühlluftstrom (116) in der zweiten Kammer aus dem aktiven Bereich zu blockieren, und eine dritte Wand (124) umfasst, um den dritten Kühlluftstrom in der dritten Kammer aus dem aktiven Bereich zu blockieren, um zu verhindern, dass eine Schicht aus pulverförmigem Baumaterial in dem aktiven Bereich gestört wird.

6. Drucksystem (100) nach Anspruch 1, das ferner eine Steuerung (502) umfasst, um eine relative Bewegung des Druckkopfes (102) und der Druckplattform (104) anzuhalten, während der Druckkopf (102) in der ersten Ruheposition oder der zweiten Ruheposition oder der dritten Ruheposition ist, bis die Steuerung (502) erfasst, dass eine Temperatur des Druckkopfes (102) unter einen Temperaturschwellenwert gefallen ist.

7. Drucksystem nach Anspruch 1, das ferner eine Steuerung (502) umfasst, um die Luftstromgeneratoranordnung (102) zu steuern, um eine Geschwindigkeit des ersten Kühlluftstroms (114) oder des zweiten Kühlluftstroms (116) oder des dritten Kühlluftstroms auf der Basis einer erfassten Temperatur des Druckkopfes (102) anzupassen.

8. Drucksystem (100) nach Anspruch 1, das ferner eine Filteranordnung (316) umfasst, durch die die Luftstromgeneratoranordnung (112) Luft ansaugt, um den ersten, den zweiten und den dritten Kühlluftstrom (114, 116) zu erzeugen, wobei die Filteranordnung (316) dazu dient, Partikel in dem ersten und dem zweiten Kühlluftstrom (114, 116) zu entfernen oder zu reduzieren.

9. Drucksystem (100) nach Anspruch 1, das ferner eine Sprüheinrichtung (402) umfasst, um einen Sprühnebel aus Flüssigkeit zu erzeugen, um den Druckkopf (102) zu kühlen.

10. Drucksystem (100) nach Anspruch 1, wobei der Druckkopf (102) dazu dient, ein Mittel an ein Ziel auf der Druckplattform (104) abzugeben, wenn der Druckkopf (102) in einem aktiven Bereich (110) zwischen dem ersten, dem zweiten und dem dritten inaktiven Bereich (118, 120; 204-1, 204-2, 204-3) ist, wobei der erste, der zweite und der dritte inaktive Bereich (118, 120; 204-1, 204-2, 204-3) von dem aktiven Bereich (110) weg sind.

11. Nicht flüchtiges Speichermedium, das Anweisungen speichert, die bei einer Ausführung ein Drucksystem (100) zu Folgendem veranlassen:
Aktivieren eines Druckkopfes (102), um ein Mittel an ein Ziel auf einer Druckplattform (104) des Drucksystems (100) abzugeben, während der Druckkopf (102) und die Druckplattform (104) in Bezug aufeinander zwischen einer ersten Ruheposition und einer zweiten Ruheposition bewegt werden;
als Reaktion auf das Erfassen, dass sich der Druckkopf (102) in einem ersten inaktiven Bereich (118; 204-1) auf einer ersten Seite der Druckplattform (104) befindet, Aktivieren eines ersten Luftstromgenerators (112-1; 202-1), um einen ersten Kühlluftstrom zu erzeugen, der in Richtung des Druckkopfes (102) gelenkt wird; und
als Reaktion auf das Erfassen, dass sich der Druckkopf (102) in einem zweiten inaktiven Bereich (120; 204-2) auf einer zweiten, unterschiedlichen Seite der Druckplattform (104) befindet, Aktivieren eines zweiten Luftstromgenerators (112-2; 202-2), um einen zweiten Kühlluftstrom zu erzeugen, der in Richtung des Druckkopfes (102) gelenkt wird,
wobei der Druckkopf (102) entlang eines Pfades bewegbar ist, der den ersten inaktiven Bereich (118), den zweiten inaktiven Bereich (120) und einen dritten inaktiven Bereich (204-3, 204-4) beinhaltet, wobei die Anweisungen bei der Ausführung das Drucksystem (100) ferner zu Folgendem veranlassen:
als Reaktion auf das Erfassen, dass sich der Druckkopf (102) in dem dritten inaktiven Bereich auf einer dritten Seite der Druckplattform (104) befindet, die sich von der ersten und der zweiten Seite unterscheidet, Aktivieren eines dritten Luftstromgenerators, um einen dritten Kühlluftstrom zu erzeugen, der in Richtung des Druckkopfes (102) gelenkt wird.

12. Nicht flüchtiges Speichermedium nach Anspruch 11, wobei die Anweisungen bei der Ausführung das Drucksystem (100) ferner zu Folgendem veranlassen:
Empfangen, von einem Temperatursensor, einer Temperatur des Druckkopfes (102), wenn der Druckkopf (102) in einer Ruheposition in dem ersten inaktiven Bereich (118) ist; und
Anhalten der relativen Bewegung des Druckkopfes (102) und der Druckplattform (104) während der Druckkopf (102) in der Ruheposition ist, um einen Druckablauf als Reaktion auf die empfangene Temperatur zu unterbrechen.

13. Nicht flüchtiges Speichermedium nach Anspruch 11, wobei die Anweisungen bei der Ausführung das Drucksystem (100) ferner zu Folgendem veranlassen:
als Reaktion auf das Erfassen, dass sich der Druckkopf (102) von dem ersten inaktiven Bereich (118) wegbewegt hat, Deaktivieren des ersten Luftstromgenerators (112-1); und
als Reaktion auf das Erfassen, dass sich der Druckkopf (102) von dem zweiten inaktiven Bereich (120) wegbewegt hat, Deaktivieren des zweiten Luftstromgenerators.

## Revendications

1. Système d'impression (100), comprenant :
une tête d'impression (102) qui est relativement mobile par rapport à une plate-forme d'impression (104) ; et
un ensemble générateur d'écoulement d'air (112) pour :
générer un premier écoulement d'air de refroidissement (114) vers la tête d'impression (102) en réponse au fait que la tête d'impression (102) se trouve dans une première région inactive (118 ; 204-1) sur un premier côté de la plate-forme d'impression (104),
générer un deuxième écoulement d'air de refroidissement (116) vers la tête d'impression (102) en réponse au fait que la tête d'impression (102) se trouve dans une deuxième région inactive (120 ; 204-2) sur un deuxième côté de la plate-forme d'impression (104), différent du premier côté de la plate-forme d'impression (104), et
générer un troisième écoulement d'air de refroidissement vers la tête d'impression (102) en réponse au fait que la tête d'impression (102) se trouve dans une troisième région inactive (120 ; 204-2) sur un troisième côté de la plate-forme d'impression (104), différent des premier et deuxième côtés de la plate-forme d'impression (104).

2. Système d'impression (100) selon la revendication 1, dans lequel l'ensemble générateur d'écoulement d'air (112) doit utiliser de l'air pré-refroidi fourni par un système de réfrigération (508) pour produire les premier et deuxième écoulements d'air de refroidissement (114, 116).

3. Système d'impression (100) selon la revendication 1, dans lequel l'ensemble générateur d'écoulement d'air comprend un premier générateur d'écoulement d'air (112-1 ; 202-1) pour générer le premier écoulement d'air de refroidissement (114), un deuxième générateur d'écoulement d'air (112-2 ; 202-2) pour générer le deuxième écoulement d'air de refroidissement (116), et un troisième générateur d'écoulement d'air (202-3) pour générer le troisième écoulement d'air de refroidissement.

4. Système d'impression (100) selon la revendication 3, dans lequel le premier générateur d'écoulement d'air (112-1 ; 202-1) doit diriger le premier écoulement d'air de refroidissement (114) à travers une première chambre de la première région inactive (118 ; 204-1) pour refroidir la tête d'impression (102) lorsque la tête d'impression (102) est dans une première position de repos et lorsque la tête d'impression (102) se déplace à travers la première région inactive (118 ; 204-1), doit diriger le deuxième écoulement d'air de refroidissement (116) à travers une deuxième chambre de la deuxième région inactive (120 ; 204-2) pour refroidir la tête d'impression (102) lorsque la tête d'impression (102) est dans une deuxième position de repos et se déplace à travers la deuxième région inactive (120 ; 204-2), et doit diriger le troisième écoulement d'air de refroidissement à travers une troisième chambre de la troisième région inactive (204-2) pour refroidir la tête d'impression (102) lorsque la tête d'impression (102) est dans une troisième position de repos et se déplace à travers la troisième région inactive (120 ; 204-2).

5. Système d'impression (100) selon la revendication 4, comprenant en outre une première barrière (122) pour bloquer le premier écoulement d'air de refroidissement (114) dans la première chambre à partir d'une région active, une deuxième barrière (124) pour bloquer le deuxième écoulement d'air de refroidissement (116) dans la deuxième chambre à partir de la région active, et une troisième barrière (124) pour bloquer le troisième écoulement d'air de refroidissement dans la troisième chambre à partir de la région active, pour éviter de perturber une couche de matériau de construction en poudre dans la région active.

6. Système d'impression (100) selon la revendication 1, comprenant en outre un dispositif de commande (502) pour suspendre le mouvement relatif de la tête d'impression (102) et de la plate-forme d'impression (104) pendant que la tête d'impression (102) est dans la première position de repos ou la deuxième position de repos ou la troisième position de repos, jusqu'à ce que le dispositif de commande (502) détecte qu'une température de la tête d'impression (102) est tombée en dessous d'un seuil de température.

7. Système d'impression selon la revendication 1, comprenant en outre un dispositif de commande (502) pour commander l'ensemble générateur d'écoulement d'air (112) afin de régler une vitesse du premier écoulement d'air de refroidissement (114) ou du deuxième écoulement d'air de refroidissement (116) ou du troisième écoulement d'air de refroidissement en fonction d'une température détectée de la tête d'impression (102).

8. Système d'impression (100) selon la revendication 1, comprenant en outre un ensemble filtre (316) à travers lequel l'ensemble générateur d'écoulement d'air (112) aspire de l'air pour générer les premier, deuxième et troisième écoulements d'air de refroidissement (114, 116), l'ensemble filtre (316) permettant d'éliminer ou de réduire les particules dans les premier et deuxième écoulements d'air de refroidissement (114, 116).

9. Système d'impression (100) selon la revendication 1, comprenant en outre un pulvérisateur (402) pour générer une pulvérisation de liquide afin de refroidir la tête d'impression (102).

10. Système d'impression (100) selon la revendication 1, dans lequel la tête d'impression (102) doit délivrer un agent à une cible sur la plate-forme d'impression (104) lorsque la tête d'impression (102) est dans une région active (110) entre les première, deuxième et troisième régions inactives (118, 120 ; 204-1, 204-2, 204-3), les première, deuxième et troisième régions inactives (118, 120 ; 204-1, 204-2, 204-3) étant éloignées de la région active (110).

11. Support de stockage non transitoire stockant des instructions qui, lors de l'exécution, amènent un système d'impression (100) à :
activer une tête d'impression (102) pour délivrer un agent à une cible sur une plate-forme d'impression (104) du système d'impression (100) lorsque la tête d'impression (102) et la plate-forme d'impression (104) sont déplacées l'une par rapport à l'autre entre une première position de repos et une deuxième position de repos ;
en réponse à la détection que la tête d'impression (102) est située dans une première région inactive (118 ; 204-1) sur un premier côté de la plate-forme d'impression (104), activer un premier générateur d'écoulement d'air (112-1 ; 202-1) pour générer un premier écoulement d'air de refroidissement dirigé vers la tête d'impression (102) ; et
en réponse à la détection que la tête d'impression (102) est située dans une deuxième région inactive (120 ; 204-2) sur un deuxième côté différent de la plate-forme d'impression (104), activer un deuxième générateur d'écoulement d'air (112-2 ; 202-2) pour générer un deuxième écoulement d'air de refroidissement dirigé vers la tête d'impression (102),
dans lequel la tête d'impression (102) est mobile le long d'un trajet qui comporte la première région inactive (118), la deuxième région inactive (120) et une troisième région inactive (204-3, 204-4), les instructions lors de l'exécution provoquant en outre le système d'impression (100) en outre :
en réponse à la détection que la tête d'impression (102) est située dans la troisième région inactive sur un troisième côté de la plate-forme d'impression (104) différent des premier et deuxième côtés, activer un troisième générateur d'écoulement d'air pour générer un troisième écoulement d'air de refroidissement dirigé vers la tête d'impression (102).

12. Support de stockage non transitoire selon la revendication 11, dans lequel les instructions lors de l'exécution amènent en outre le système d'impression (100) à :
recevoir, d'un capteur de température, une température de la tête d'impression (102) lorsque la tête d'impression (102) est dans une position de repos dans la première région inactive (118) ; et
suspendre le mouvement relatif de la tête d'impression (102) et de la plate-forme d'impression (104) pendant que la tête d'impression (102) est dans une position de repos pour interrompre une opération d'impression en réponse à la température reçue.

13. Support de stockage non transitoire selon la revendication 11, dans lequel les instructions lors de l'exécution amènent en outre le système d'impression (100) à :
en réponse à la détection que la tête d'impression (102) s'est éloignée de la première région inactive (118), désactiver le premier générateur d'écoulement d'air (112-1) ; et
en réponse à la détection que la tête d'impression (102) s'est éloignée de la deuxième région inactive (120), désactiver le deuxième générateur d'écoulement d'air.
